# EUROPÄISCHE PATENTSCHRIFT

(11) **EP 2 017 484 B1**
(45) Veröffentlichungstag und Bekanntmachung des Hinweises auf die Patenterteilung: **21.12.2011**
(21) Anmeldenummer: 08104110.5
(22) Anmeldetag: 27.05.2008
(51) Int. Cl.: F16B 37/00, F16B 37/04

(54) **Anbindevorrichtung**
Connecting device
Dispositif d'attache

(30) Priorität: 18.07.2007 DE 102007000388
(43) Veröffentlichungstag der Anmeldung: 21.01.2009
(73) Patentinhaber: HILTI Aktiengesellschaft, 9494 Schaan (LI)
(72) Erfinder: Ostermeier, Peter, 86911, Diessen (DE); Hoffmann, Armin, 86899, Landsberg (DE); Merhar, Thomas, 9494, Schaan (LI)
(74) Vertreter: Wildi, Roland

(56) Entgegenhaltungen:
- EP-A2- 0 905 425
- DE-U1- 29 820 923

## Beschreibung

Die Erfindung betrifft eine Anbindevorrichtung für eine Gewindestange an einer Montageschiene, die eine von Rändern begrenzte Montageöffnung aufweist, mit einem Hintergreifteil zum bereichsweisen Hintergreifen der die Montageöffnung begrenzenden Ränder und einer Justiereinrichtung für die Gewindestange, wobei die Justiereinrichtung ein drehbar in dem Hintergreifteil gelagertes Hülsenelement mit einem Innengewinde für die Gewindestange sowie an einem ersten Endbereich einen radial von dem Hülsenelement abragenden Vorsprung zum Hintergreifen des Hintergreifteils aufweist, und wobei ein drehfest mit dem Hülsenelement verbundenes Einstellelement vorgesehen ist, das einen dem Hintergreifteil zugewandten Anschlag aufweist.

Für eine flexible Installation von Leitungen, wie Rohren, Lüftungskanälen, Elektrokabeltrassen und dergleichen, im Bereich der Haustechnik oder der Industrie werden Montageschienen eingesetzt, an denen mittels einer Anbindevorrichtung z. B. eine Rohrschelle über eine Gewindestange im Abstand zu der Montageschiene festlegbar ist.

Derartige Montageschienen weisen zumindest eine in Längserstreckung der Montageschiene verlaufende, von zueinander beabstandeten Rändern begrenzte Montageöffnung auf. In der Montageöffnung sind Gewindestangen z. B. mittels Schienenmuttem festlegbar, an denen die Rohrschellen für die Leitungen angeordnet werden.

Aus der DE 38 23 000 A1 ist eine Anbindevorrichtung für eine Gewindestange an einer Montageschiene bekannt, die ein Hintergreifteil zum bereichsweisen Hintergreifen der die Montageöffnung begrenzenden Ränder und einer Justiereinrichtung für die Gewindestange aufweist. Das Hintergreifteil weist eine Länge, die kleiner als der Abstand der die Montageöffnung der Montageschiene begrenzenden Ränder zueinander ist, sowie eine Breite auf, die grösser als der Abstand der Ränder der Montageöffnung zueinander ist. Damit kann das Hintergreifteil durch die Montageöffnung in die Montageschiene eingeführt und durch eine Drehung der Anbindevorrichtung um die Längsachse von 90° in eine die Montageöffnung hintergreifende Stellung gebracht werden. In der unverspannten Stellung der Anbindevorrichtung ist diese für eine Positionierung der Anbindevorrichtung entlang der Montageschiene verschiebbar.

Die Justiereinrichtung der Anbindevorrichtung gemäss der DE 38 23 000 A1 weist ein drehbar in dem Hintergreifteil gelagertes Hülsenelement mit einem Innengewinde für die Gewindestange sowie einem Aussengewinde auf. An einem ersten Endbereich des Hülsenelementes ist ein radial von diesem abragender Vorsprung zum Hintergreifen des Hintergreifteils vorgesehen. Nach dem Einführen des Hintergreifteils in die Montageöffnung wird auf das Aussengewinde des Hülsenelementes eine Spannmutter aufgeschraubt, bis die Anbindevorrichtung mit der Montageschiene verspannt ist. Dabei werden Bereiche der die Montageöffnung begrenzenden Ränder zwischen dem Hintergreifteil und der Mutter eingeklemmt. Anschliessend wird die an der Anbindevorrichtung festzulegende Gewindestange in das Innengewinde eingeschraubt und nach der gewünschten Ausrichtung bezüglich der Montageschiene mit einer auf der Gewindestange angeordneten Sicherungsmutter in dieser Stellung fixiert.

Nach dem Einlegen der Leitungen in die Rohrschellen ist es oftmals erforderlich, z. B. aufgrund von Unebenheiten des Untergrundes oder zur Gewährleistung eines Gefälles der zu fixierenden Leitung, die Anbindung nachträglich in der Höhe zu justieren und somit die Leitungen jeweils im gewünschten Abstand zum Untergrund auszurichten.

Nachteilig an der bekannten Lösung gemäss der DE 38 23 000 A1 ist, dass die Montage der Anbindevorrichtung an der Montageschiene aufwändig ist.

Die EP 0905425 A2 betrifft ein Befestigungselement zum Festlegen beliebiger Bauteile an einer hinterschnittenen Befestigungsöffnung, mit einem in diese einsetzbaren Stützteil, das im Inneren der Befestigungsöffnung verdrehbar ist und dabei die Befestigungsöffnung begrenzenden Haltevorsprünge hintergreift, mit einer separaten Gegenhalteplatte, die aussen an den Haltevorsprüngen abstützt, sowie mit einem elastischen Element, wobei das elastischen Element das Stützteil und die Gegenhalteplatte verbindet und wobei ein Verbindungsteil am Stützteil drehbar zu befestigen ist und in seiner Längsrichtung längenanpassbar ist, wenn das Befestigungselement an der Befestigungsöffnung festgelegt ist. Dabei kann eine Kegeldruckfeder vorgesehen sein, die auf die Gegenhalteplatte wirkt. Ein ähnliches Befestigungselement mit Kegeldruchfeder geht aus der DE 298 20 923 U1 hervor.

Aufgabe der Erfindung ist es, eine Anbindevorrichtung für eine justierbare Gewindestange an einer Montageschiene zu schaffen, die eine einfache Montage der Anbindevorrichtung an der Montageschiene ermöglicht.

Die Aufgabe ist durch die Merkmale des unabhängigen Anspruchs gelöst. Vorteilhafte Weiterbildungen sind in den Unteransprüchen dargelegt.

Die Erfindung nach Anspruch 1 ist dadurch gekennzeichnet, dass ein Federelement zur Federbeaufschlagung des Hintergreifteils in Richtung des Anschlages des Einstellelementes zwischen dem Vorsprung am ersten Endbereich des Hülsenelementes und dem Hintergreifteil vorgesehen ist.

Gemäss der Erfindung ist ein drehfest mit dem Hülsenelement verbundenes Einstellelement vorgesehen, das einen dem Hintergreifteil zugewandten Anschlag aufweist.

Durch Drehen des Einstellelementes wird eine in dem Innengewinde des Hülsenelementes angeordnete Gewindestange in der Höhe beziehungsweise im Abstand zu der Montageschiene justiert, ohne dass dabei die Gewindestange um ihre Längsachse beziehungsweise die Längsachse der Anbindevorrichtung rotiert. Die Gewindestange wird bei der Justierung nur in Richtung der Längsachse im gewünschten Mass verschoben.

Anschliessend wird beispielsweise eine Sicherungsmutter auf der Gewindestange angeordnet und mit dem Einstellelement in Anlage gebracht. Dabei wird die Anbindevorrichtung mit der Montageschiene verspannt und Bereiche der die Montageöffnung begrenzenden Ränder zwischen dem Hintergreifteil und dem Anschlag des Einstellelementes eingeklemmt.

Das Hintergreifteil weist eine ausreichend stabile Ausgestaltung auf, welche ein Verbiegen des Hintergreifteils unter der an der Gewindestange angehängten Last verhindert. Vorteilhaft ist das Hintergreifteil aus Metall gefertigt, beispielsweise aus Metallguss.

Für eine formschlüssige Fixierung der Anbindevorrichtung an der Montageschiene ist vorteilhaft eine Profilierung an zwei, einander gegenüberliegenden Seitenrändern des Hintergreifteils vorgesehen, die in der hintergreifenden Stellung des Hintergreifteils mit den die Montageöffnung begrenzenden Rändern in Anlage kommen. Vorteilhaft sind die Ränder der Montageschiene ebenfalls mit einer Profilierung versehen, wobei vorteilhaft die Profilierung am Hintergreifteil komplementär zu dieser Profilierung ausgebildet ist. Für einen verbesserten Formschluss zwischen dem Hintergreifteil und der Montageschiene ist die Profilierung vorteilhaft jeweils eine Verzahnung.

Die Anbindevorrichtung wird dem Anwender vorteilhaft vormontiert zur Verfügung gestellt, wobei die einzelnen Teile der Anbindevorrichtung weiter vorteilhaft unverlierbar miteinander verbunden sind.

Vorzugsweise ist das Hülsenelement begrenzt axial verschieblich zu dem Einstellelement gelagert, was die Montage der Anbindevorrichtung an der Montageschiene erleichtert. Für die Montage der Anbindevorrichtung kann ein ausreichend grosser Abstand zwischen dem Hintergreifteil und dem Anschlag des Einstellelementes vorgesehen sein, der beim Verspannen der Anbindevorrichtung auf den erforderlichen Abstand zum Klemmen der die Montageöffnung hintergreifenden Ränder einfach reduzierbar ist.

Bevorzugt ist zur Drehmitnahme des Hülsenelementes ein Verbindungsmittel zwischen dem Einstellelement und dem Hülsenelement vorgesehen. Das Verbindungsmittel umfasst beispielsweise Stifte, welche in entsprechenden, an dem Hülsenelement und dem Einstellelement ausgebildeten Aufnahmen angeordnet sind und die drehfeste Verbindung zwischen den beiden Teilen sicherstellen.

In einer erfindungsgemässen alternativen Ausführungsform weist das Einstellelement zur Drehmitnahme des Hülsenelementes Kupplungsflächen zur lösbaren Kupplung mit dem Hülsenelement auf. Das Einstellelement weist dazu beispielsweise eine mit Kupplungsflächen versehene Aufnahme auf, die mit einem im Wesentlichen komplementär dazu ausgebildeten Abschnitt des Hülsenelementes zusammenführbar ist. Beispielsweise ist die Kupplungsaufnahme eine Sechskantaufnahme, wie sie beispielsweise für Imbus-Werkzeuge verwendet wird. Der Abschnitt am Hülsenelement ist mit Gegenkupplungsflächen versehen.

Vorzugsweise ist ein Anschlagelement zwischen dem Hintergreifteil und dem Anschlag des Einstellelementes vorgesehen, das mit der Aussenseite der Montageschiene in Anlage kommt. Das Einstellelement liegt vorteilhaft an der Aussenseite des Anschlags an und ist zu diesem verdrehbar. Beim Verspannen der Anbindevorrichtung mit der Montageschiene werden die Bereiche der die Montageöffnung begrenzenden Ränder zwischen dem Hintergreifteil und dem Anschlagelement und somit indirekt auch dem Anschlag des Einstellelementes eingeklemmt.

Erfindungsgemäss ist ein Federelement zur Federbeaufschlagung des Hintergreifteils in Richtung des Anschlages des Einstellelementes zwischen dem Vorsprung am ersten Endbereich des Hülsenelementes und dem Hintergreifteil vorgesehen. Das Federelement ist eine Druckfeder und beispielsweise als Spiralfeder ausgebildet. Das Federelement spannt das Hintergreifteil in Richtung des Einstellelementes vor, so dass nach der Anordnung der Anbindevorrichtung an der Montageschiene diese selbsthemmend an der Montageschiene gehalten ist. Infolge der selbsthemmenden Verschiebbarkeit der Anbindevorrichtung in der Montageöffnung ist auch bei vertikal ausgerichteten Montageschienen eine einfache Montage der Anbindevorrichtung gewährleistet.

Vorzugsweise ist der Vorsprung von einem mit dem Hülsenelement verbundenen Ringelement gebildet. Das Ringelement ist vorteilhaft über Verbindungsmittel wie beispielsweise Haltestifte mit dem Hülsenelement verbunden, wobei die Verbindung besonders vorteilhaft drehfest ausgebildet ist. In einer alternativen Ausführungsform wird nach dem Zusammenführen der einzelnen Elemente der Anbindevorrichtung zylindrisches Ende des Hülsenelements beispielsweise durch Umbördeln radial nach aussen erweitert, wobei der dabei geschaffene, vorteilhaft radial umlaufende Rand das den Vorsprung bildende Ringelement des Hülsenelementes ausbildet.

Die Erfindung wird nachstehend anhand von zwei Ausführungsbeispielen näher erläutert. Es zeigen:
- Fig. 1: Einen Schnitt durch ein erstes Ausführungsbeispiel einer erfindungsgemässen Anbindevorrichtung;
- Fig. 2: eine Ansicht eines Hintergreifteils; und
- Fig. 3: einen Schnitt durch ein zweites Ausführungsbeispiel einer erfindungsgemässen Anbindevorrichtung.

Grundsätzlich sind in den Figuren gleiche Teile mit den gleichen Bezugszeichen versehen.

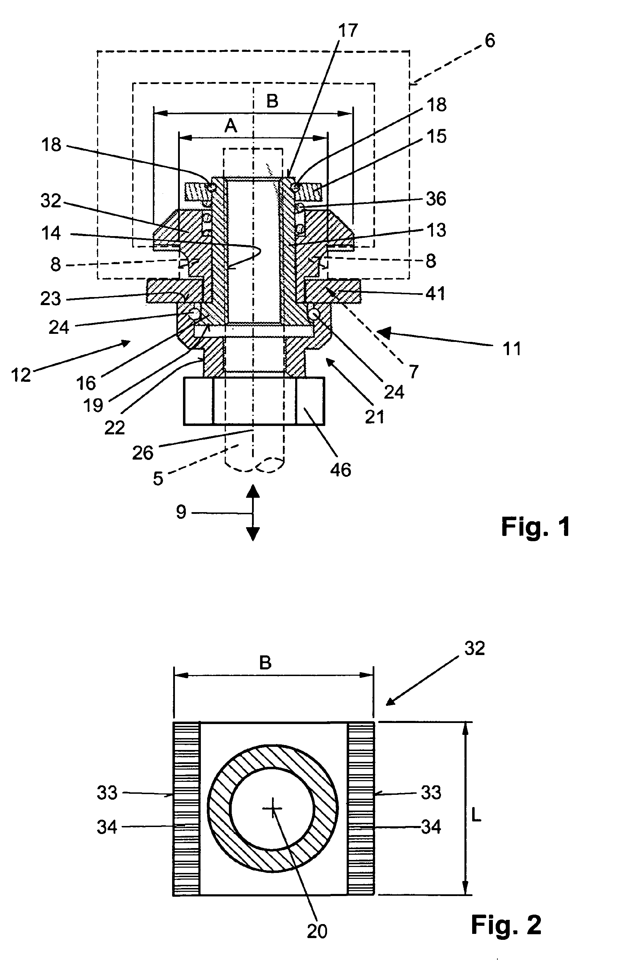

In den Figuren 1 und 2 ist eine Anbindevorrichtung 11 für eine Gewindestange 5 an einer Montageschiene 6 gezeigt. Die Montageschiene 6 weist eine in der Längserstreckung der Montageschiene 6 verlaufende Montageöffnung 7 auf, die von in einem Abstand A zueinander angeordneten Rändern 8 begrenzt ist.

Die Anbindevorrichtung 11 umfasst ein Hintergreifteil 32 zum bereichsweisen Hintergreifen der die Montageöffnung 7 begrenzenden Ränder 8 und eine Justiereinrichtung 12 für die Gewindestange 5. Die Justiereinrichtung 12 weist ein drehbar in dem Hintergreifteil 32 gelagertes Hülsenelement 13 mit einem Innengewinde 14 für die Gewindestange 5 sowie an einem ersten Endbereich 17 einen radial von dem Hülsenelement 13 abragenden Vorsprung 15 zum Hintergreifen des Hintergreifteils 32 auf. Weiter ist ein drehfest mit dem Hülsenelement 13 verbundenes Einstellelement 21 vorgesehen, das einen dem Hintergreifteil 32 zugewandten Anschlag 23 aufweist. Das Einstellelement 21 weist an seiner Aussenseite eine Sechskantausbildung als Drehangriff 22 für ein Verspannwerkzeug auf. Das Hülsenelement 13 ist begrenzt axial verschieblich zu dem Einstellelement 21 gelagert. Zur Drehmitnahme des Hülsenelementes 13 sind Verbindungsmittel 24 in Form von quer zur Längsachse 26 der Anbindevorrichtung 11 verlaufenden Stifte zwischen dem Einstellelement 21 und dem Hülsenelement 13 vorgesehen. An dem zweiten, dem ersten Endbereich 17 gegenüberliegenden Endbereich 19 des Hülsenelementes 13 ist ein radial von dem Hülsenelement 13 abragender Halteabschnitt 16 für die Verbindung des Hülsenelementes 13 und dem Einstellelement 21 vorgesehen. Der Halteabschnitt 16 des Hülsenelementes 13 bildet zudem einen Axialanschlag für das axial zu dem Hülsenelement 13 verschieblichen Hintergreifteil 32 aus.

Weiter umfasst die Anbindevorrichtung 11 zwischen dem Hintergreifteil 32 und dem Anschlag 23 des Einstellelementes 21 ein Anschlagelement 41, das mit der Aussenseite der Montageschiene 6 in Anlage bringbar ist.

Ein Federelement 36 zur Federbeaufschlagung des Hintergreifteils 32 in Richtung des Anschlages 23 des Einstellelementes 21 ist zwischen dem Vorsprung 15 am freien Endbereich 17 des Hülsenelementes 13 und dem Hintergreifteil 32 vorgesehen. Der Vorsprung 15 ist ein Ringelement, das über Verbindungsmittel 18 mit dem Hülsenelement 13 verbunden ist.

Das Hintergreifteil 32 weist vorteilhaft eine Länge L, die kleiner als der Abstand A der die Montageöffnung 7 der Montageschiene 6 begrenzenden Ränder 8 zueinander ist, sowie eine Breite B auf, die grösser als der Abstand A der Ränder 8 der Montageöffnung 7 zueinander ist. Das Hintergreifteil 32 ist an zwei, einander gegenüberliegenden Seitenrändern 33, die im hintergreifenden Zustand des Hintergreifteils 32 mit der Montageschiene 6 in Anlage kommen, mit einer Profilierung 34 versehen, die als eine Verzahnung ausgebildet ist.

Zur Montage einer hier nicht dargestellten, an einer Gewindestange 5 angeordneten Rohrschelle wird das Hintergreifteil 32 der Anbindevorrichtung 11, welche bereits vor der Anordnung an der Montageschiene 6 an der Gewindestange 5 aufgeschraubt sein kann, an der gewünschten Stelle in die Montageschiene 6 eingeführt und die gesamte Anbindevorrichtung 11 um ihre Längsachse 26 um 90° verdreht, so dass die Seitenränder 33 des Hintergreifteils 32 die Ränder 8 der Montageöffnung 7 hintergreifen. Die Anbindevorrichtung 11 mit der Gewindestange und Rohrschelle ist entlang der Montageöffnung 7 selbsthemmend verschiebbar. Nun wird die zu befestigende Leitung (hier nicht dargestellt) in der Rohrschelle angeordnet.

Durch Drehen des Einstellelementes 21 wird das drehbar im Hintergreifteil 32 gelagerte Hülsenelement 13 mitgedreht, wobei die über das mit dem Aussengewinde der Gewindestange 5 in Eingriff stehende Innengewinde 14 des Hülsenelementes 13 die Gewindestange 5 entsprechend der Drehrichtung des Einstellelementes 21 entlang der Längsachse 26 der Anbindevorrichtung 11 in Richtung des Doppelpfeils 9 zur Montageschiene 6 hin oder davon weg verschoben wird. Dadurch wird die Position der in der Rohrschelle angeordneten Leitung senkrecht zur Längsrichtung der Montageschiene 6 eingestellt. Da die Gewindestange 5 beim Justieren nicht mitdreht, kann der an der Gewindestange 5 festgelegte Gegenstand, wie beispielsweise eine in einer Rohrschelle eingelegte Leitung während dem Justiervorgang an der Gewindestange 5 verbleiben. Nach der Justierung der Gewindestange 5 wird eine auf die Gewindestange 5 aufgeschraubte Sicherungsmutter 46 mit dem Einstellelement 21 in Anlage gebracht. Bei einem weiteren Schraubvorgang der Sicherungsmutter 46 in Richtung des Einstellelementes 21 wird das Hintergreifteil 32 und somit die Anbindevorrichtung 11 mit der Montageschiene 6 verspannt, wobei Bereiche der die Montageöffnung 7 begrenzenden Ränder 8 zwischen dem Hintergreifteil 32 und dem Anschlag 23 des Einstellelementes 21 beziehungsweise dem Anschlagelement 41 eingeklemmt werden.

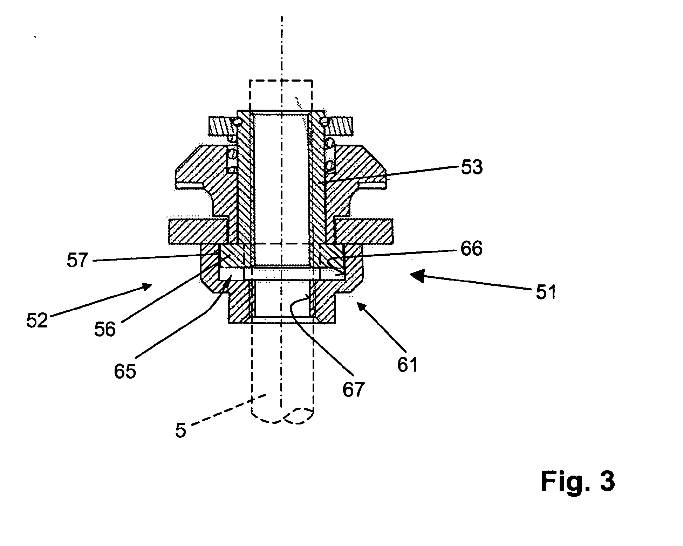

Bei der in der Figur 3 gezeigten Ausführungsform der Anbindevorrichtung 51 umfasst die Justiereinrichtung 52 ein Einstellelement 61 mit einer Aufnahme 65, die zur Drehmitnahme des Hülsenelementes 53 und zur lösbaren Kupplung mit dem Hülsenelement 53 Kupplungsflächen 66 aufweist. Das Hülsenelement 53 ist mit einem Abschnitt 56 versehen, der entsprechend ausgebildete Gegenkupplungsflächen 57 aufweist. Weiter ist das Einstellelement 61 mit einem Innengewindeabschnitt 67 versehen, womit das Einstellelement 61 auf die Gewindestange 5 aufschraubbar ist. In einer alternativen Ausführung dazu weist das Einstellelement an seinem Anschlag eine lösbare Schnappeinrichtung auf, die in eine entsprechende Gegeneinrichtung, wie beispielsweise eine Nut, an dem Hülsenelement eingreift.

## Patentansprüche

1. Anbindevorrichtung für eine Gewindestange (5) an einer Montageschiene (6), die eine von Rändern (8) begrenzte Montageöffnung (7) aufweist, mit einem Hintergreifteil (32) zum bereichsweisen Hintergreifen der die Montageöffnung (7) begrenzenden Ränder (8) und einer Justiereinrichtung (12; 52) für die Gewindestange (5), wobei
die Justiereinrichtung (12; 52) ein drehbar in dem Hintergreifteil (32) gelagertes Hülsenelement (13; 53) mit einem Innengewinde (14) für die Gewindestange (5) sowie an einem ersten Endbereich (17) einen radial von dem Hülsenelement (13; 53) abragenden Vorsprung (15) zum Hintergreifen des Hintergreifteils (32) aufweist,
und wobei ein drehfest mit dem Hülsenelement (13; 53) verbundenes Einstellelement (21; 61) vorgesehen ist, das einen dem Hintergreifteil (32) zugewandten Anschlag (23) aufweist, **dadurch gekennzeichnet,**
**dass** ein Federelement (36) zur Federbeaufschlagung des Hintergreifteils (32) in Richtung des Anschlages (23) des Einstellelementes (21) zwischen dem Vorsprung (15) am ersten Endbereich (17) des Hülsenelementes (13) und dem Hintergreifteil (32) vorgesehen ist.

2. Anbindevorrichtung nach Anspruch 1, **dadurch gekennzeichnet, dass** das Hülsenelement (13; 53) begrenzt axial verschieblich zu dem Einstellelement (21; 61) gelagert ist.

3. Anbindevorrichtung nach Anspruch 1 oder 2, **dadurch gekennzeichnet, dass** zur Drehmitnahme des Hülsenelementes (13) Verbindungsmittel (24) zwischen dem Einstellelement (21) und dem Hülsenelement (13) vorgesehen sind.

4. Anbindevorrichtung nach Anspruch 1 oder 2, **dadurch gekennzeichnet, dass** das Einstellelement (61) zur Drehmitnahme des Hülsenelementes (53) Kupplungsflächen (66) zur lösbaren Kupplung mit dem Hülsenelement (53) aufweist.

5. Anbindevorrichtung nach einem der Ansprüche 1 bis 4, **dadurch gekennzeichnet, dass** ein Anschlagelement (41) zwischen dem Hintergreifteil (32) und dem Anschlag (23) des Einstellelementes (21) vorgesehen ist.

6. Anbindevorrichtung nach einem der Ansprüche 1 bis 5, **dadurch gekennzeichnet, dass** an einem zweiten, dem ersten Endbereich (17) gegenüberliegenden Endbereich (19) des Hülsenelementes (13) ein radial von dem Hülsenelement (13) abragender Halteabschnitt (16) für die Verbindung des Hülsenelementes (13) und dem Einstellelement (21) vorgesehen ist, wobei der Halteabschnitt (16) des Hülsenelementes (13) einen Axialanschlag für das axial zu dem Hülsenelement (13) verschiebliche Hintergreifteil (32) ausbildet.

7. Anbindevorrichtung nach einem der vorstehenden Ansprüche, **dadurch gekennzeichnet, dass** der Vorsprung (15) von einem mit dem Hülsenelement (13) verbundenen Ringelement gebildet ist.

## Claims

1. Connecting device for a threaded rod (5) on a mounting rail (6), which has a mounting opening (7) limited by edges (8), with a rear grip part (32) for gripping behind the edges (8) limiting the mounting opening (7) in certain areas and an adjustment device (12; 52) for the threaded rod (5), in which
the adjustment device (12; 52) has a sleeve element (13; 53) mounted so that it may rotate in the rear grip part (32) with an internal thread (14) for the threaded rod (5) and a projection (15) extending radially from the sleeve element (13; 53) in a first end area (17) for gripping behind the rear grip part (32),
and in which a setting element (21; 61) connected to the sleeve element (13; 53) in a torsionally rigid way is provided, which has a stop (23) facing the rear grip part (32), **characterised in that**,
a spring element (36) is provided for spring loading the rear grip part (32) in the direction of the stop (23) of the setting element (21) between the projection (15) in the first end area (17) of the sleeve element (13) and the rear grip part (32).

2. Connecting device according to claim 1, **characterised in that** the sleeve element (13; 53) is mounted so that it may move axially to the setting element (21; 61) in a limited way.

3. Connecting device according to claim 1 or 2, **characterised in that** fasteners (24) are provided between the setting element (21) and the sleeve element (13) for torque transfer of the sleeve element (13).

4. Connecting device according to claim 1 or 2, **characterised in that** the setting element (61) for torque transfer of the sleeve element (53) has coupling areas (66) for detachable coupling with the sleeve element (53).

5. Connecting device according to one of claims 1 to 4, **characterised in that** a stop element (41) is provided between the rear grip part (32) and the stop (23) of the setting element (21).

6. Connecting device according to one of claims 1 to 5, **characterised in that** a retaining section (16) projecting radially from the sleeve element (13) in a second end area (19) opposite the first end area (17) of the sleeve element (13) is provided for connecting the sleeve element (13) and the setting element (21), in which the retaining section (16) of the sleeve element (13) forms an axial stop for the rear grip part (32), which may move axially to the sleeve element (13).

7. Connecting device according to one of the previous claims, **characterised in that** the projection (15) is formed by a ring element connected to the sleeve element (13).

## Revendications

1. Dispositif d'attache pour une tige filetée (5) sur un rail de montage (6), lequel rail comporte une ouverture de montage (7) délimitée par des rebords (8), muni d'une partie de prise arrière (32) pour réaliser, dans certaines zones, une prise arrière des rebords (8) délimitant l'ouverture de montage (7), et d'un dispositif d'ajustement (12 ; 52) pour la tige filetée (5), dans lequel
le dispositif d'ajustement (12 ; 52) comporte un élément de douille (13 ; 53) monté de manière rotative dans la partie de prise arrière (32), muni d'un filetage intérieur (14) pour la tige filetée (5) ainsi qu'une saillie (15) faisant radialement saillie à partir de l'élément de douille (13 ; 53) sur une première zone d'extrémité (17), pour la prise arrière de la partie de prise arrière (32),
et dans lequel est prévu un élément de réglage (21 ; 61) relié à l'élément de douille (13 ; 53) de manière bloquée en rotation, l'élément de réglage comportant une butée (23) dirigée vers la partie de prise arrière (32), **caractérisé en ce que**
un élément de ressort (36) est prévu pour solliciter élastiquement la partie de prise arrière (32) en direction de la butée (23) de l'élément de réglage (21) entre la saillie (15) sur la première zone d'extrémité (17) de l'élément de douille (13) et la partie de prise arrière (32).

2. Dispositif d'attache selon la revendication 1, **caractérisé en ce que** l'élément de douille (13 ; 53) est monté pour pouvoir être déplacé axialement de manière limitée par rapport à l'élément de réglage (21 ; 61).

3. Dispositif d'attache selon la revendication 1 ou 2, **caractérisé en ce que** des moyens de liaison (24) sont prévus entre l'élément de réglage (21) et l'élément de douille (13) pour un entraînement en rotation de l'élément de douille (13).

4. Dispositif d'attache selon la revendication 1 ou 2, **caractérisé en ce que** l'élément de réglage (61) comporte des surfaces de couplage (66) pour un entraînement en rotation de l'élément de douille (53) pour un couplage amovible avec l'élément de douille (53).

5. Dispositif d'attache selon l'une quelconque des revendications 1 à 4, **caractérisé en ce qu'**un élément de butée (41) est prévu entre la partie de prise arrière (32) et la butée (23) de l'élément de réglage (21).

6. Dispositif d'attache selon l'une quelconque des revendications 1 à 5, **caractérisé en ce qu'**une partie de retenue (16) faisant radialement saillie à partir de l'élément de douille (13) est prévue sur une seconde zone d'extrémité (19) de l'élément de douille (13) en face de la première zone d'extrémité (17), pour le raccordement de l'élément de douille (13) et de l'élément de réglage (21), dans lequel la partie de retenue (16) de l'élément de douille (13) forme une butée axiale pour la partie de prise arrière (32) axialement mobile par rapport à l'élément de douille (13).

7. Dispositif d'attache selon l'une quelconque des revendications précédentes, **caractérisé en ce que** la saillie (15) est formée par un élément annulaire relié à l'élément de douille (13).
